# EUROPEAN PATENT APPLICATION

(11) **EP 3 846 244 A1**
(43) Date of publication of application: **07.07.2021**
(21) Application number: 19855401.6
(22) Date of filing: 20.08.2019
(51) Int. Cl.: H01M 2/10

(54) **BATTERY HOLDER AND BATTERY PACK**

(30) Priority: 30.08.2018 JP 2018161226
(71) Applicant: DKS Co. Ltd., Kyoto-shi, Kyoto 600-8873 (JP)
(72) Inventor: NISHIKAWA, Akiyoshi, kyoto-shi, Kyoto 600-8873 (JP); HIGASHIZAKI, Tetsuya, kyoto-shi, Kyoto 600-8873 (JP); ISHINO, Mana, kyoto-shi, Kyoto 600-8873 (JP); KITAGAWA, Takashi, kyoto-shi, Kyoto 600-8873 (JP); AKAO, Toshikazu, kyoto-shi, Kyoto 600-8873 (JP)
(74) Representative: TBK
(86) International application number: PCT/JP2019/032385
(87) International publication number: WO 2020/045159

(57) **Abstract**

Provided are a battery holder that enables efficient production of a high-quality battery pack, and a battery pack using the battery holder.

A battery holder 10 at least includes a tubular body having a through-space (battery-housing portion 10a) for housing a battery such as a lithium-ion battery 20. This tubular body includes a fibrous substrate 11 and a resin composition 12 containing an inorganic filler.

## Description

### Technical Field

The present invention relates to a battery holder used for arranging a plurality of batteries, and a battery pack using the battery holder.

### Background Art

Lithium-ion batteries, which have advantages of, for example, being rechargeable secondary batteries, being small and lightweight, and having high storage capacity per unit volume or unit weight, have been widely used as, for example, power sources of mobile electronic devices. Furthermore, in these years, storage batteries have come to be increasingly common in, for example, electric apparatuses having higher power consumption than mobile electronic devices, such as motorized wheelchairs, electric light vehicles, or electric cars, or in residential use (household use); in these applications, lithium-ion batteries are used.

Under such circumstances, as means for keeping up with higher power consumption, battery packs in which a plurality of batteries are combined together are known. In such a battery pack, in order to arrange a plurality of batteries in parallel, for example, a battery holder having a plurality of recesses or a plurality of spaces corresponding to the outer peripheral shape of the batteries has been used. With such a battery holder, adjacent batteries can be held in arrangement at increased intervals, to thereby suppress thermal propagation (phenomenon in which heat generated in a battery propagates to another battery) in the batteries.

In addition to the battery pack using such a battery holder, there is another known battery pack in which gaps among a plurality of batteries are filled with a potting material (potting resin). For example, Patent Literature 1 discloses a battery pack in which a plurality of cylindrical batteries are arranged and gaps among these batteries are filled with potting-resin portions.

With the above-described battery holder, adjacent batteries can be arranged at increased intervals; however, this causes, as the whole battery pack, a decrease in the number of batteries housed per unit volume, resulting in a decrease in energy density. In the battery pack disclosed in Patent Literature 1, instead of the battery holder, potting resin portions are formed by filling with a potting material, so that the batteries are more closely packed at intervals of 1.0 mm or less to thereby avoid the decrease in energy density. In addition, the potting resin portions conform to and are in contact with the outer peripheral surfaces of the batteries, so that heat generated in the batteries dissipates throughout the potting resin portions, to thereby suppress thermal propagation.

### Citation List

### Patent Literature

PTL 1: Japanese Unexamined Patent Application Publication No. 2012-028244

### Summary of Invention

### Technical Problem

In general, a potting material is used to produce a battery pack by arranging a plurality of batteries to form a module, placing the module into, for example, a mold, and, into the mold or the like, injecting and curing a liquid potting material. Thus, during filling with the potting material, the following problems during filling occur: for example, it is difficult to control the potting material so as to have a uniform thickness to fill the gaps between the batteries; it is also not easy to achieve filling with the potting material without entry of bubbles; and the potting material flows even into non-target regions for filling. These problems during filling may affect the quality of the resultant battery packs.

In addition, during curing of the potting material, the following problems during curing also occur: in order to cure the liquid potting material, heating is necessary; and in order to cure the potting material, a predetermined curing time is necessary. These problems during curing may affect, for example, the production costs or production efficiency of battery packs. In addition, in the resultant battery packs, since the gaps among the batteries are filled with the cured potting material, it is not easy to inspect the battery packs, which is also problematic.

The present invention has been made in order to address such problems; an object is to provide a battery holder that enables efficient production of a high-quality battery pack, and a battery pack using the battery holder.

### Solution to Problem

In order to achieve the above-described object, a battery holder according to the present invention has a configuration of including at least a tubular body having a through-space for housing a battery, wherein the tubular body includes a fibrous substrate and a resin composition containing an inorganic filler.

In the case of the above-described configuration, such tubular-body (tubular) battery holders are just fitted to the outer peripheries of a plurality of batteries and the batteries are arranged and combined together to thereby produce a battery pack. Thus, compared with the case of filling with a liquid potting material, increase in the production efficiency can be achieved. In addition, since the battery holder is a tubular body, compared with the case of filling with a liquid potting material, batteries can be arranged at more precise intervals. In addition, the tubular body includes, in addition to the resin composition, the fibrous substrate, so that high strength can be imparted to the tubular body to thereby effectively suppress breakage of the tubular body.

In addition, in the case of the above-described configuration, the necessity of use of a liquid potting material has been eliminated, so that it is no longer necessary to take measure for preventing entry of bubbles into the potting material or flowing of the potting material into non-target regions. Furthermore, curing of a liquid potting material is no longer performed, which eliminates the necessity of equipment such as a mold or heating means

(or mixing means when the potting material is of a two-component mixing type), and also eliminates the necessity of curing time. Thus, in addition to increase in the production efficiency of the battery pack, suppression of the increase in the production costs can be achieved.

Furthermore, in the case of the above-described configuration, the battery holder is fitted to a battery, so that the tubular-body battery holder substantially conforms to and is in contact with the outer peripheral surface of the battery. The battery holder contains an inorganic filler, so that heat from the battery can be suitably dissipated, to thereby achieve high flame retardancy or high heat dissipation. In addition, in a battery pack in which such tubular bodies are close-packed, as in potting materials, heat from batteries can be dissipated throughout the tubular bodies adjacent to the batteries.

In addition, in the case of the above-described configuration, during arranging and combining together a plurality of batteries fitted with the battery holders (holder-fitted batteries), a space containing no resin can be easily formed. For example, when such batteries are cylindrical, the battery holders can also be formed so as to have a hollow-cylindrical shape; combining together a plurality of such holder-fitted batteries inevitably results in formation of a space among adjacent cylinders. Thus, compared with the cases of filling with potting materials, a reduction in the weight of resin can be achieved to thereby achieve a reduction in the weight of the battery pack.

In addition, in the case of the above-described configuration, a battery pack is provided by just combining together and arranging a plurality of holder-fitted batteries, so that the resultant battery pack can be inspected by just examining the appearance. In addition, during production of the battery pack, the arrangement or combination form of the holder-fitted batteries can be adjusted in accordance with, for example, the shape of the package of the battery pack. This can provide, during production of the battery pack, improved universal usability, applicability, or design.

The above-described battery holder having the configuration may have a configuration in which, a fiber forming the fibrous substrate is at least one fiber selected from the group consisting of glass fiber, polyester fiber, carbon fiber, boron fiber, aramid fiber, nylon fiber, polyethylene fiber, polyarylate fiber, BPO fiber, polyphenylene sulfide fiber, polyimide fiber, and fluorofiber.

The above-described battery holder having the configuration may have a configuration in which the fibrous substrate is formed of braid, woven fabric, knitted fabric, nonwoven fabric, monofilaments, or rovings.

The above-described battery holder having the configuration may have a configuration in which the tubular body has a fiber volume fraction Vf in a range of 15 to 65%.

The above-described battery holder having the configuration may have a configuration in which the resin composition contains, relative to 100 mass% of a total amount of the resin composition, the inorganic filler in a range of 40 to 80 mass%.

The above-described battery holder having the configuration may have a configuration in which the resin composition contains, as a resin component, at least one resin selected from the group consisting of urethane resin, epoxy resin, silicone resin, phenol resin, unsaturated polyester resin, and melamine resin.

The above-described battery holder having the configuration may have a configuration in which the inorganic filler is at least one selected from the group consisting of divalent or trivalent metal hydroxide, divalent metal sulfate hydrate, zinc salt of oxoacid, silica, alumina, dawsonite, and sodium hydrogen carbonate.

A battery pack according to the present invention has a configuration of including the above-described battery holder having the configuration.

### Advantageous Effects of Invention

In the present invention, the above-described configurations provide advantages of providing a battery holder that enables efficient production of a high-quality battery pack, and a battery pack using the battery holder.

### Brief Description of Drawings

[Fig. 1] Fig. 1 illustrates the relationship between a schematic perspective view, a schematic top view, and a schematic sectional view illustrating a typical example of the configuration of a battery holder according to the present invention.
[Fig. 2] Fig. 2 illustrates the relationship between a schematic sectional view and a schematic top view illustrating an example where a battery is housed in the battery holder illustrated in Fig. 1 (holder-fitted battery).
[Fig. 3] Fig. 3(A) illustrates the relationship between schematic side views illustrating examples of the fibrous substrate of the battery holder illustrated in Fig. 1, and Figs. 3(B) and 3(C) are schematic enlarged plan views illustrating resin compositions formed in the fibrous substrates.
[Fig. 4] Figs. 4(A) and 4(B) are schematic top views illustrating examples of a minimum unit for providing a battery pack by combining together such holder-fitted batteries as in Fig. 2.

### Description of Embodiments

Hereinafter, typical embodiments of the present invention will be described with reference to drawings. Incidentally, in the following description, like or similar elements in all the drawings are denoted by the same reference signs, and will not be repeatedly described.

### [Battery holder and holder-fitted battery]

The battery holder according to the present disclosure includes at least a tubular body having a through-space for housing a battery, wherein the tubular body includes a fibrous substrate and a resin composition containing an inorganic filler. The specific configuration of the tubular body is not particularly limited, and the tubular body can be provided so as to have a through-space corresponding to the shape of a battery to be housed.

In the present disclosure, the type of the battery to be housed is not particularly limited, and publicly known various batteries can be employed. Specific examples include secondary batteries such as lithium-ion batteries, nickel-cadmium batteries, and nickel-hydrogen batteries. Of these, lithium-ion batteries are particularly preferred. In addition, in the present disclosure, the shape of the battery to be housed is also not particularly limited, and typical examples include tall shapes such as a cylindrical shape (a cylindrical-column shape), a prismatic shape (a quadrangular-prism shape or a rectangular-parallelepiped shape), and other pillar shapes.

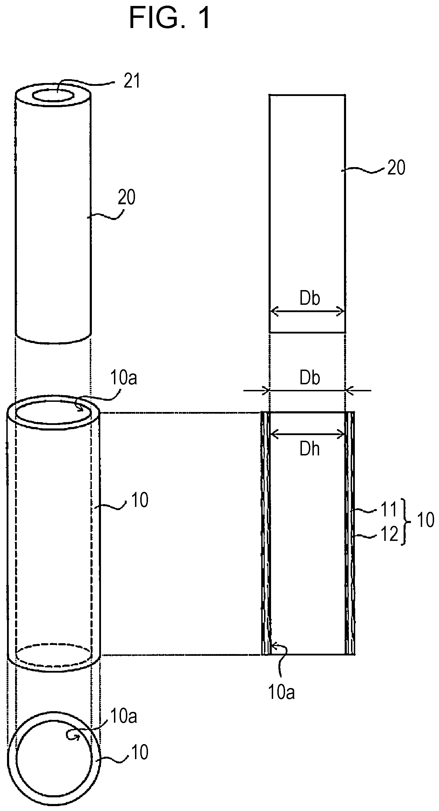

An example of the specific configuration of the battery holder according to the present disclosure will be described with reference to a case where a battery to be housed is a cylindrical lithium-ion battery. Referring to Fig. 1, a battery holder 10 according to this embodiment has a tubular shape having a circular cross-section (tubular body), and the hollow-cylindrical body (wall portion) of the battery holder 10 has a predetermined thickness as described later. Within the battery holder 10, a battery-housing portion 10a for housing a cylindrical lithium-ion battery 20 is formed. This battery-housing portion 10a is a cylindrical through-space similar to the shape of the lithium-ion battery 20.

Incidentally, in the example illustrated in Fig. 1, over the perspective view of the hollow-cylindrical battery holder 10, a perspective view of the cylindrical lithium-ion battery 20 is disposed so as to correspond to the battery holder 10; in addition, under the perspective view of the hollow-cylindrical battery holder 10, a top view (or a bottom view) of the battery holder 10 is disposed. In addition, on the viewer's right side of the perspective view of the battery holder 10, a sectional view of the battery holder 10 is disposed. Over this sectional view, a side view of the cylindrical lithium-ion battery 20 is disposed so as to correspond to the sectional view.

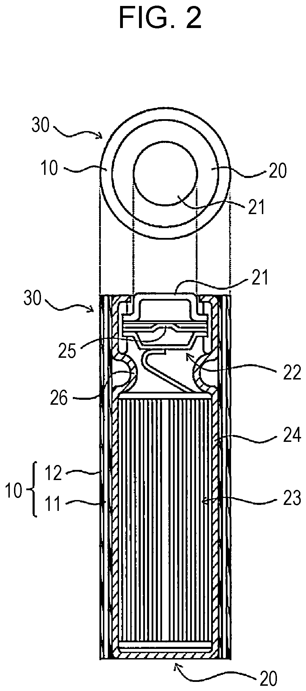

When the lithium-ion battery 20 is housed within the battery-housing portion 10a of the battery holder 10, stated another way, when the battery holder 10 is fitted to the outer peripheral surface of the lithium-ion battery 20, referring to Fig. 2, the upper end and the lower end of the lithium-ion battery 20 are exposed at the upper end and the lower end of the battery holder 10. Incidentally, for convenience of explanation, the lithium-ion battery 20 fitted with the battery holder 10 will be referred to as "a holder-fitted battery 30".

Fig. 2 includes a schematic sectional view (the lower drawing in Fig. 2) of the holder-fitted battery 30 and its corresponding top view (the upper drawing in Fig. 2). In the cylindrical lithium-ion battery 20, in general, as also illustrated in Fig. 1 as the perspective view of the lithium-ion battery 20 (the upper left drawing in Fig. 1), a terminal cap 21 is exposed at the upper end of the lithium-ion battery 20. As illustrated in Fig. 2, in the upper portion of the lithium-ion battery 20, a sealing part 22 including the terminal cap 21 is disposed. In the lower portion of the lithium-ion battery 20, that is, under the sealing part 22, an electrode group 23 is disposed. The sealing part 22 and the electrode group 23 are enclosed (housed) within an outer packaging part 24.

The specific configuration of the sealing part 22 is not particularly limited, but, in the cylindrical lithium-ion battery 20, typically includes, in addition to the terminal cap 21, a metal filter, a gasket, a metal valve part, and a gas release valve 25, for example. The gas release valve 25 is configured to release, to the outside, gas that is generated within the lithium-ion battery 20 and that increases the internal pressure. In the schematic configuration in Fig. 2, the gas release valve 25 is disposed, as a component of the sealing part 22, under the terminal cap 21.

The electrode group 23 includes, for example, sheet-shaped positive-electrode member and negative-electrode member, film-shaped separators, and current collectors. The positive-electrode member, the negative-electrode member, and the separators have a configuration in which the positive-electrode member and the negative-electrode member are individually sandwiched between the separators and stacked, and spirally wound. The positive-electrode member and the negative-electrode member are individually electrically connected to the current collectors. The outer packaging part 24 has a cylindrical shape having a bottom at the lower end and having an opening at the upper end, and is generally formed of metal. The outer packaging part 24 houses, in its lower portion, the electrode group 23; the negative-electrode-member current collector of the electrode group 23 is electrically connected to, for example, the bottom surface of the outer packaging part 24.

After the electrode group 23 is housed, an electrolytic solution is injected through the opening at the upper end of the outer packaging part 24; subsequently, the sealing part 22 is housed over the electrode group 23. At this time, the positive-electrode-member current collector of the electrode group 23 is electrically connected to the metal filter of the sealing part 22. In the cylindrical lithium-ion battery 20, as schematically illustrated in Fig. 2, the outer packaging part 24 is processed so as to protrude in a frame-like form from the inner peripheral surface of the outer packaging part 24, to thereby form a seat portion 26 for positioning the sealing part 22. To this seat portion 26, the sealing part 22 is fitted, to thereby seal (close) the opening at the upper end of the outer packaging part 24. Subsequently, the opening at the upper end of the outer packaging part 24 is closed such that the upper surface of the terminal cap 21 is exposed, so that the sealing part 22, the electrode group 23, and the electrolytic solution are sealed within the outer packaging part 24.

Incidentally, the internal configuration of the lithium-ion battery 20 in Fig. 2 is a mere example, and the configuration of the cylindrical battery to be fitted with the battery holder 10 according to the present disclosure is not limited thereto. Alternatively, in a case of a shape other than a cylindrical shape, such as a prismatic shape, as the internal configuration, publicly known configurations for prismatic lithium-ion batteries can be employed. Alternatively, even in a case where the lithium-ion battery has a shape other than a cylindrical shape and a prismatic shape, publicly known internal configurations for the shape can be employed. Alternatively, even when the battery is of a type other than the lithium-ion battery, publicly known internal configurations can be employed.

At the outer peripheral surface of the outer packaging part 24, in addition to the metal body, a resin cover layer (cover) may be disposed. Alternatively, though it depends on the internal configuration of the lithium-ion battery 20, the outer packaging part 24 itself may be formed of, instead of metal, resin. The battery holder 10 according to the present disclosure is an article different from the cover layer and the outer packaging part 24 formed of resin that are optionally disposed at the outer peripheral surface of the lithium-ion battery 20, and is an article additionally fitted to the lithium-ion battery 20.

In the holder-fitted battery 30 in Fig. 2, the tubular-body (tubular) battery holder 10 is just fitted to the outer periphery of the lithium-ion battery 20. Thus, a plurality of such holder-fitted batteries 30 can be just arranged and combined together as described later to thereby produce a battery pack. Thus, increase in the production efficiency can be achieved, compared with existing battery packs provided by filling with liquid potting materials.

The battery holder 10 is, as illustrated in schematic sectional structures in Fig. 1 and Fig. 2, as described above, formed of a fibrous substrate 11 and a resin composition 12 containing an inorganic filler. Fig. 1 and Fig. 2 illustrate the fibrous substrate 11 so as to be covered with a layer of the resin composition 12; however, this illustration is provided for convenience of explanation, and the battery holder 10 (tubular body) will suffice as long as it is at least formed of the fibrous substrate 11 and the resin composition 12. Incidentally, the specific formulas of the fibrous substrate 11, the resin composition 12, and the inorganic filler contained in the resin composition 12 will be described later.

The battery holder 10 that is a tubular body is not particularly limited in terms of thickness (the thickness of the wall portion formed from the fibrous substrate 11 and the resin composition 12 so as to be tubular). Such battery holders 10 constituting a battery pack at least ensure predetermined intervals so as to suppress thermal propagation such as thermal runaway propagation between adjacent lithium-ion batteries 20. Thus, the thickness of the tubular body (wall portion) can be appropriately set in accordance with the intervals between lithium-ion batteries 20 (battery intervals).

The tubular body can typically have a thickness in a range of 0.5 to 3.0 mm. The upper limit may be 2.0 mm or less, or 1.5 mm or less. When the lower limit is 0.5 mm, in the holder-fitted batteries 30 disposed adjacent to each other, the minimum intervals (minimum battery intervals) between adjacent lithium-ion batteries 20 can be set to about 1.0 mm. As a result, thermal propagation can be suitably suppressed. Alternatively, in a case where the minimum intervals are allowed to be less than 1.0 mm, it is apparent that the tubular body may have a thickness of less than 0.5 mm.

When the tubular body has a thickness of 3.0 mm or less, though it depends on various conditions such as the type of the lithium-ion batteries 20 or the specific configuration of the battery pack, the number of batteries housed per unit volume of the battery pack can be suitably set. This effectively suppresses the decrease in the energy density of the battery pack. However, depending on various conditions, it is apparent that, even with a tubular body having a thickness of more than 3.0 mm, the decrease in the energy density of the battery pack may be avoided in some cases. In such a case, for example, primarily for suppression of thermal propagation, the thickness of the tubular body can be set. When the battery holder 10 is such a tubular body having a uniform thickness, compared with the existing battery packs filled with liquid potting materials, batteries can be arranged at more precise intervals.

The through-space within the battery holder 10, namely, the battery-housing portion 10a can be designed as a space so as to correspond to the shape of a battery to be housed (in this embodiment, the cylindrical lithium-ion battery 20). In this embodiment, as illustrated in Fig. 1, the diameter of the battery-housing portion 10a, namely, the inner diameter Dh of the tubular body (battery holder 10) can be substantially equal to the diameter (outer diameter) Db of the lithium-ion battery 20 (Dh ≈ Db or Dh = Db).

The length of the tubular body (battery holder 10) (measure in the longitudinal direction, total length) is not particularly limited, and can be appropriately set in accordance with the length of the battery to be housed. In the case of the cylindrical lithium-ion battery 20, the length of the battery holder 10 may be, as illustrated as an example in Fig. 2, substantially the same as the length of the lithium-ion battery 20; depending on the configuration of the battery pack, the length of the battery holder 10 may be set to be smaller than or larger than the length of the lithium-ion battery 20. The battery holder 10 is a tubular body formed of the fibrous substrate 11 and the resin composition 12, and hence can be appropriately cut to a length in accordance with the length of the battery. Thus, the battery holder 10 according to the present disclosure may be, in advance, cut to a length so as to correspond to the battery, or may be cut to a relatively large length such that the length can be adjusted at the time of use, or may be provided, without being cut, in a long and rolled-up hose shape and can be appropriately cut at the time of use.

Furthermore, in this embodiment, the battery holder 10 is formed of the above-described tubular body alone; however, the present disclosure is not limited to this; the battery holder 10 may include, in addition to the tubular body, as needed, another member, for example. In this embodiment, the tubular body serving as the battery holder 10 has, continuously in the longitudinal direction, substantially the same sectional dimensions (outer diameter and inner diameter) and sectional shape; however, the present disclosure is not limited to this, and the tubular body may have a sectional shape or sectional dimensions that partially vary.

### [Resin composition forming battery holder]

The battery holder 10 (tubular body) according to the present disclosure is, as described above, formed of the fibrous substrate 11 and the resin composition 12 containing an inorganic filler. Of these, the fibrous substrate 11 mainly contributes to an increase in the strength of the tubular body, and the resin composition 12 mainly contributes to, due to the inorganic filler, the flame retardancy or heat dissipation of the tubular body. In addition, the resin component constituting the resin composition 12 has flexibility, so that, when the battery-housing portion 10a houses a battery, the tubular body (battery holder 10) can conform to and be in contact with the outer periphery of the battery.

The resin composition 12 forming the battery holder 10 according to the present disclosure at least contains a resin component and an inorganic filler. As the resin component, various resins (polymers or plastics) publicly known in the field of battery packs can be suitably employed. Typical examples of the resin component include urethane resin, epoxy resin, silicone resin, phenol resin, unsaturated polyester resin, and melamine resin. Of these resins, at least one alone may be used, or two or more may be appropriately combined and used (for example, as a polymer blend or a polymer alloy).

Furthermore, two or more resins of the same type that are different in, for example, chemical structures may be used in combination. For example, when the resin component is urethane resin, two or more urethane resins that are different in combinations of a polyisocyanate and a polyol can be used. Alternatively, two or more urethane resins of the same combination of a polyisocyanate and a polyol that are obtained under different synthesis conditions can be used.

In the battery holder 10 according to the present disclosure, of the above-described resins, urethane resin is particularly preferably used as the resin component. The urethane resin has lower viscosity during processing than other resins, and curing is achieved at ordinary temperature and does not require high temperature. This provides, during production of the tubular body, high processibility or high production efficiency.

The more specific formula of the urethane resin is not particularly limited. For example, the polyisocyanate and the polyol used as raw materials for the urethane resin can be appropriately selected from publicly known ones. For example, typical examples of the polyisocyanate include aromatic, alicyclic, or aliphatic polyisocyanates having two or more isocyanate groups, and modified polyisocyanates provided by modifying the foregoing. These polyisocyanates may be prepolymers. Typical examples of the polyol include polyether-based polyols, polyester-based polyols, polyhydric alcohols, and hydroxy-group-containing diene-based polymers. These polyisocyanates or polyols may be used alone or in appropriate combination of two or more thereof. A catalyst for accelerating the resinification reaction of the polyisocyanate and the polyol may be used. Examples of the catalyst include amine catalysts, metal-compound-based catalysts, and isocyanurate-forming catalysts. These catalysts may also be used alone or in combination of two or more thereof.

The resin composition 12 forming the battery holder 10 contains, in addition to the resin component, at least an inorganic filler. This inorganic filler can contribute to the flame retardancy or heat dissipation of the tubular body (battery holder 10). Specific examples of the inorganic filler include divalent or trivalent metal hydroxides such as aluminum hydroxide, magnesium hydroxide, and calcium hydroxide; divalent metal sulfates such as calcium sulfate and magnesium sulfate; zinc salts of oxoacids such as zinc borate and zinc stannate; silica; alumina; dawsonite; and sodium hydrogen carbonate. These inorganic fillers may be used alone or in combination of two or more appropriately selected therefrom.

In the battery holder 10 according to the present disclosure, of the above-described inorganic fillers, in particular, a divalent or trivalent metal hydroxide such as aluminum hydroxide or magnesium hydroxide is preferably used. Such divalent or trivalent metal hydroxides generate water upon heating, to thereby impart high flame retardancy to the tubular body (battery holder 10) and also to provide high heat dissipation of the tubular body.

Other preferred examples of the inorganic filler include divalent metal sulfates such as calcium sulfate and magnesium sulfate. Such divalent metal sulfates tend to form hydrates, and hence generate water upon heating as in divalent or trivalent metal hydroxides. Another preferred example of the inorganic filler is sodium hydrogen carbonate. Sodium hydrogen carbonate also generates water upon heating. Furthermore, such a divalent or trivalent metal hydroxide and sodium hydrogen carbonate may be used in combination. Sodium hydrogen carbonate is less expensive than aluminum hydroxide or magnesium hydroxide. Thus, use of these in combination provides high flame retardancy and high heat dissipation, and also achieves reduction in the increase in the production costs of the tubular body.

The inorganic filler can be added as powder to the resin component. The average particle size of the inorganic filler is not particularly limited, and is generally in a range of 0.5 to 40 µm, more preferably in a range of 2 to 20 µm. The shape of the powder of the inorganic filler is also not particularly limited, and various shapes such as a spherical shape, a flake shape (scalelike shape), an acicular shape, and an amorphous shape can be employed. Incidentally, the measurement method for the average particle size is not particularly limited, and the average particle size can be determined by particle size analysis using the publicly known laser diffraction method.

The resin composition 12 forming the battery holder 10 may contain, in addition to the resin component and the inorganic filler, publicly known additives. Non-limiting examples of the additives include a blowing agent, a foam stabilizer, a filler, a stabilizer, a colorant, a flame retardant, and a plasticizer. In particular, in the present disclosure, as described above, it is important that the tubular body (battery holder 10) has flame retardancy. Thus, the resin composition 12 preferably contains a flame retardant.

Specifically, the flame retardant is not particularly limited, and examples include phosphorus-based flame retardants, halogen-based flame retardants, and melamine-based flame retardants. Examples of the phosphorus-based flame retardants include halogen-containing phosphates such as tris(2-chloroethyl) phosphate and tris(2,3-dibromopropyl) phosphate; non-halogen phosphates such as trimethyl phosphate, tricresyl phosphate, trisxylenyl phosphate, and triphenyl phosphate; and ammonium polyphosphate. Examples of the halogen-based flame retardants include decabromodiphenyl ether, pentabromodiphenyl ether, hexabromocyclododecane, tetrabromobisphenol A, and hexabromobenzene. Examples of the melamine-based flame retardants include melamine cyanurate. Furthermore, antimony compounds such as antimony trioxide may also be used as flame retardants. A combination of an antimony compound and a halogen-based flame retardant provides further improved flame retardancy.

The specific formula of the resin composition 12 forming the battery holder 10 is not particularly limited. In the present disclosure, as long as the resin composition 12 is composed of at least two components that are a resin component and an inorganic filler, the inorganic filler content is not specifically limited. From the viewpoint of flame retardancy of the resultant tubular body (battery holder 10), relative to 100 mass% of the total amount of the resin composition 12 (the whole resin composition 12), the inorganic filler content (content ratio) can be in a range of 40 to 80 mass%, preferably in a range of 45 to 70 mass%.

When the inorganic filler content is more than 80 mass%, though it depends on the type of the resin component, the resin component content relative to the whole resin composition 12 may be excessively low, and a suitable tubular body may not be obtained. On the other hand, when the inorganic filler content is less than 40 mass%, though it depends on the type of the inorganic filler or the resin component, the inorganic filler content may be excessively low and high flame retardancy or high heat dissipation may not be imparted to the tubular body. However, it is apparent that the inorganic filler content can be appropriately set in accordance with the desired properties of the resin composition 12 (or the tubular body) and is not particularly limited to the above-described ranges.

### [Fibrous substrate forming battery holder]

The battery holder 10 according to the present disclosure (tubular body) is formed of the above-described resin composition 12 and fibrous substrate 11. The specific species of the fiber forming the fibrous substrate 11 is not particularly limited, and publicly known fibrous materials can be suitably used. Specific examples include inorganic fibers such as glass fiber, carbon fiber, boron fiber, and basalt fiber; organic resin fibers such as polyester fiber, aramid fiber, nylon fiber, polyethylene fiber, polyarylate fiber, BPO fiber, polyphenylene sulfide (PPS) fiber, and polyimide fiber; and fluorofiber. These fibrous materials may be used alone or in appropriate combination of two or more thereof.

For selection of the fibrous material used for the fibrous substrate 11, a suitable material can be appropriately selected in accordance with various desired conditions (such as increase in the strength of the tubular body or suppression of thermal propagation) for the battery holder 10. For example, in a case where the strength of the tubular body is a priority, at least one fibrous material can be selected from the group consisting of glass fiber, carbon fiber, boron fiber, basalt fiber, para-aramid fiber, nylon fiber, ultra-high-molecular-weight polyethylene fiber, polyarylate fiber, and BPO fiber, for example. Alternatively, in a case where heat resistance or flame retardancy of the tubular body is a priority, at least one fibrous material can be selected from the group consisting of glass fiber, basalt fiber, PPS fiber, polyimide fiber, fluorofiber, meta-aramid fiber, and BPO fiber, for example.

The fibers forming the fibrous substrate 11 may be filaments or staple fibers. However, in the case of mixing staple fibers themselves with the resin composition 12, they may function, not as the "substrate" of the tubular body, but as "filler" for the resin composition 12. Thus, staple fibers are preferably spun and used as yarn (spun yarn), or used as nonwoven fabric. Incidentally, the above-described typical fibrous materials are chemical fibers such as synthetic fibers or inorganic fibers, and production of filaments (spinning) can be easily achieved. Thus, as the fibrous substrate 11, a fibrous substrate formed of filaments can be suitably used.

The fibrous substrate 11 may be formed of filaments themselves (filament yarn), or formed of twist yarn or bundles of filaments. For example, in the case of using, as the fibrous material, inorganic fiber such as glass fiber, rovings can be suitably used. Rovings are paralleled strands of bundles of glass-fiber monofilaments (glass-fiber filaments or filament yarn), and are ordinarily wound into a cylindrical form.

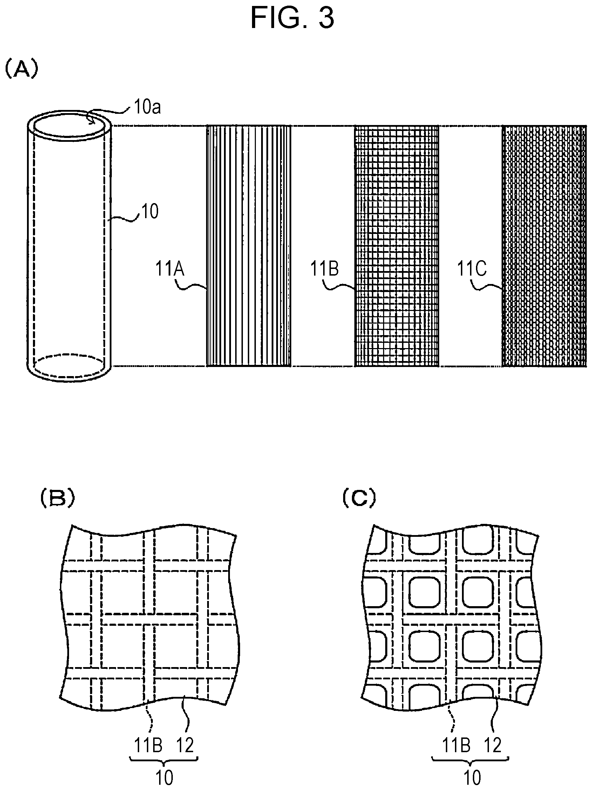

When the fibrous substrate 11 is formed of "yarn materials" such as monofilaments (filaments or filament yarn) or rovings, the fibrous substrate 11 can have a configuration in which the yarn materials are arranged in parallel so as to extend in the longitudinal direction of the tubular body (battery holder 10). For example, Fig. 3(A) schematically illustrates, on the left side, the battery holder 10, and illustrates, on the right side of the battery holder 10, three types of fibrous substrates 11A to 11C such that dotted lines are used to show relations therebetween. Of these, the fibrous substrate 11A is formed of yarn materials and a plurality of yarn materials are arranged in parallel so as to extend in the longitudinal direction of the battery holder 10. In such a fibrous substrate 11A, the resin composition 12 functions as a binder.

The fibrous substrate 11, which may be formed of yarn materials themselves as in the fibrous substrate 11A, may alternatively be formed of braid, woven fabric, knitted fabric, or nonwoven fabric as illustrated in the fibrous substrate 11B or 11C. In other words, as the fibrous substrate 11, yarn materials processed into cloth may be used as a "cloth material". Fig. 3(A) schematically illustrates the fibrous substrate 11B as an example of woven fabric; Fig. 3(A) schematically illustrates the fibrous substrate 11C as an example of knitted fabric.

Specific configuration examples of the cloth material forming the fibrous substrate 11 are as follows: examples of the braid include flat braid, round braid, square braid, and interlocking braid; examples of the woven fabric include plain weave, twill weave, and sateen weave; examples of the knitted fabric include plain stitch, rib stitch, interlock stitch, and purl stitch; examples of the nonwoven fabric include needlepunched nonwoven, thermobonded nonwoven, spunbonded nonwoven, and meltblown nonwoven; however, the specific configurations of the cloth materials are also not particularly limited. Of these cloth materials, the woven fabric or the knitted fabric may be formed of derivative weave, or may be formed so as to include foundation weave and derivative weave. Alternatively, the nonwoven fabric may be chemical bonded nonwoven as long as it does not affect various properties of the tubular body.

In the present disclosure, in the tubular body, which is, as described above, formed of the fibrous substrate 11 and the resin composition 12, the combination state of the fibrous substrate 11 and the resin composition 12 is not particularly limited. For example, Fig. 1 and Fig. 2 schematically illustrate examples of the battery holder 10 (tubular body) where the fibrous substrate 11 is completely covered with the resin composition 12 (or the fibrous substrate 11 is embedded within the resin composition 12); however, it is apparent that the tubular body is not limited to this. Fig. 3(B) illustrates an example, as a schematic enlarged partial view, where the woven-fabric fibrous substrate 11B is completely covered with the resin composition 12.

The fibrous substrate 11 may not be completely covered with the resin composition 12. For example, when the fibrous substrate 11 is formed of a cloth material (for example, in Fig. 3(A), the woven-fabric fibrous substrate 11B or the knitted-fabric fibrous substrate 11C), the resin composition 12 may be disposed only on the outer peripheral surface or the inner peripheral surface of the cloth material. Alternatively, as illustrated in Fig. 3(C), the yarn materials forming the woven-fabric fibrous substrate 11B may be covered with the resin composition 12, and gaps may be formed between the yarn materials. The same applies to other cloth materials such as the knitted fabric.

The combination ratio of the fibrous substrate 11 and the resin composition 12 forming the tubular body is not particularly limited. Typically, the tubular body can have a fiber volume fraction Vf in a range of 15 to 65%, preferably in a range of 40 to 60%. The fiber volume fraction Vf is publicly known in, for example, the field of carbon fiber reinforced plastic (CFRP), and is an index that indicates (in a volume ratio), in a composite material composed of fiber matrix materials, the amount of fibers (content) contained in the whole composite material. Also in the present disclosure, in the tubular body formed of at least the fibrous substrate 11 and the resin composition 12, the fibrous substrate 11 content can be represented by fiber volume fraction Vf. Incidentally, the fiber volume fraction Vf can be calculated in accordance with JIS K7075.

When the tubular body has a fiber volume fraction Vf of 65% or more, though it depends on various conditions, the resin composition 12 contained in the tubular body may have an excessively small absolute quantity, so that it may not impart high flame retardancy or high heat dissipation to the battery holder 10 (tubular body). On the other hand, when the fiber volume fraction Vf is less than 15%, though it depends on various conditions, the fibrous substrate 11 contained in the tubular body may have an excessively small absolute quantity, so that the strength of the battery holder 10 (tubular body) may not be suitably increased.

As has been described, the battery holder 10 according to the present disclosure at least includes a tubular body having a through-space (battery-housing portion 10a) for housing a battery, wherein this tubular body includes the fibrous substrate 11 and the resin composition 12 containing an inorganic filler. Thus, in the battery holder 10, the inorganic filler contained in the resin composition 12 provides high flame retardancy or high heat dissipation, and the fibrous substrate 11 provides high strength. Thus, for example, during placing of a battery into the through-space, the risk of breakage of the tubular body is effectively reduced, and heat from the battery can be dissipated throughout the adjacent tubular body.

### [Battery pack]

The battery pack according to the present disclosure at least includes the above-described battery holder 10, and the specific configuration thereof is not particularly limited. The battery pack according to the present disclosure can be produced by arranging a plurality of such battery holders 10, and subsequently causing batteries (for example, cylindrical lithium-ion batteries 20 in Fig. 1 or Fig. 2) to be housed individually in the battery holders 10. However, as described above, preferably, batteries are individually fitted with the battery holders 10 to provide holder-fitted batteries 30, and the plurality of holder-fitted batteries 30 are arranged to produce a battery pack. In this case, in accordance with, for example, the shape of the package of the battery pack, the arrangement or combination form of the holder-fitted batteries 30 can be adjusted. This can provide, during production of the battery pack, improved universal usability, applicability, or design.

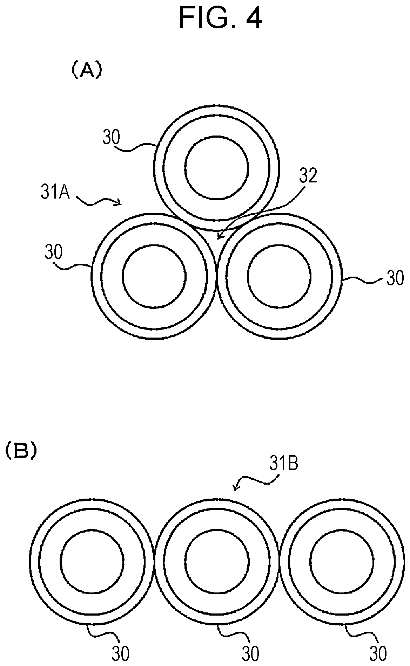

During production of the battery pack, the minimum unit of a combination of a plurality of holder-fitted batteries 30 is not particularly limited; for example, as illustrated in Fig. 4(A) or Fig. 4(B), three holder-fitted batteries 30 can be combined together to provide a minimum unit that is a battery pack unit 31A or a battery pack unit 31B. For example, referring to Fig. 4(A), the battery pack unit 31A is provided as a unit in which three holder-fitted batteries 30 are arranged in parallel to form a triangular shape when viewed from above. This battery pack unit 31A has, among three adjacent holder-fitted batteries 30, a dead space 32.

Such a holder-fitted battery 30 is constituted by the lithium-ion battery 20 that is cylindrical and the battery holder 10 that is also hollow-cylindrical, so that the resultant holder-fitted battery 30 is also cylindrical. Combining together of three of such holder-fitted batteries 30 inevitably results in formation of the dead space 32 among the adjacent cylinders. This dead space 32 is regarded as, from the viewpoint of the battery pack, a space including no resin. Thus, compared with existing battery packs filled with potting materials, a reduction in the weight of resin can be achieved to thereby achieve a reduction in the weight of the battery pack.

Unlike the battery pack unit 31A, referring to Fig. 4(B), the battery pack unit 31B is provided as a flat-plate-shaped unit in which three holder-fitted batteries 30 are arranged in parallel to form a line when viewed from above. Unlike the battery pack unit 31A, this battery pack unit 31B does not have, within the unit itself, the dead space 32. However, arrangement of such battery pack units 31B so as to be adjacent to each other results in formation of the dead space 32 among three adjacent holder-fitted batteries 30, as in the battery pack unit 31A. Thus, compared with existing battery packs filled with potting materials, a reduction in the weight of resin can be achieved to thereby achieve a reduction in the weight of the battery pack.

As described above, since the battery holder 10 is formed of resin and contains an inorganic filler, even in the case of generation of heat from the lithium-ion battery 20, it suitably dissipates the heat (achieves dissipation of the heat); in addition, like the battery pack units 31A and 31B in Figs. 4(A) and 4(B), a battery pack is provided such that the tubular bodies are close-packed, so that heat from any lithium-ion battery 20 can be dissipated throughout the tubular body (battery holder 10) of an adjacent holder-fitted battery 30. This further improves the heat-dissipation effect.

The more specific configuration of the battery pack is not particularly limited, and, except for the battery holder 10, publicly known configurations can be suitably employed. For example, the battery pack can include a housing (casing) that houses the above-described battery pack unit 31A or 31B (or the holder-fitted batteries 30), and lead members for establishing electrical connection among the batteries. The shape of the housing is not limited to the publicly known rectangular parallelepiped shape, and relatively complex shapes can be employed. This is intended that, in the present disclosure, the battery pack units 31A or 31B as the minimum units can be housed so as to fill the internal space of the housing.

As the lead members, publicly known configurations can be employed as long as they establish electrical connection among batteries such as the lithium-ion batteries 20 in the battery pack unit 31A or 31B being housed. Specific examples include plate-shaped members and wiring members. Incidentally, in each battery pack unit 31A or 31B, the batteries may be connected together via lead members in advance, and furthermore such a plurality of battery pack units 31A or 31B may be connected together via lead members.

The process of producing (assembling) the battery pack is not particularly limited, and may be, for example, a process in which, as described above, the battery pack unit 31A or 31B or the holder-fitted batteries 30 are placed within a housing, and subsequently the plurality of batteries are connected together via lead members. This process of producing the battery pack may include the step of forming the holder-fitted batteries 30 (the process of producing the holder-fitted batteries 30).

Referring to Fig. 2, in such a holder-fitted battery 30, the upper end and the lower end of the lithium-ion battery 20 are exposed at the upper end and the lower end of the battery holder 10. Stated another way, in the holder-fitted battery 30, only the outer peripheral surface of the lithium-ion battery 20 is fitted with the battery holder 10. This results in prevention of incidents occurring in existing battery packs using potting materials, such as adhesion of resin to an upper end having the gas release valve 25. In existing battery packs, liquid potting materials are used, so that potting materials may flow into non-target regions and the potting materials may adhere to, for example, the upper end of a battery.

When such a battery is the lithium-ion battery 20, upon occurrence of a problem in the battery, the electrolytic solution may be partially decomposed to generate gas, resulting in an increase in the internal pressure of the battery. For this reason, the sealing part 22 of the lithium-ion battery 20 includes the gas release valve 25 as described above. When the battery internal pressure increases beyond a predetermined value, the gas release valve 25 is opened. This releases the internal gas to the outside, to circumvent the increase in the battery internal pressure. However, when resin such as a potting material adheres to the upper end of the lithium-ion battery 20, the gas release valve 25 may not appropriately function, and may not appropriately release the internal gas.

According to the present disclosure, the battery holder 10 can be disposed only on the outer peripheral surface of the lithium-ion battery 20. This substantially eliminates the possibility that unsuitable adhesion of a potting material causes the gas release valve 25 to malfunction.

In addition, in the case of using a potting material, during injection of the potting material into the battery pack, the potting material may undergo entry of bubbles. When the potting material containing bubbles is cured, properties of the potting material may be affected. In addition, as described above, in order to prevent the potting material from adhering to non-target regions such as the upper end of a battery, a frame member or a molding member for controlling flow of the potting material becomes necessary. In addition, in order to heat-cure a liquid potting material, heating means becomes necessary; alternatively, when the potting material is of a two-component mixing type, mixing means for preparing the potting material becomes necessary.

By contrast, in the present disclosure, liquid potting materials are not used, and the tubular-body battery holder 10 is just fitted to the outer peripheral surface of a battery. This eliminates the necessity of the frame member, the molding member, the heating means, the mixing means, and the like and also eliminates the necessity of the curing time for curing potting materials. Thus, during production of the battery pack, in addition to increase in the production efficiency, suppression of the increase in the production costs can be achieved.

Moreover, in the present disclosure, a battery pack is provided by just combining together and arranging a plurality of holder-fitted batteries 30, so that the resultant battery pack can be inspected by just examining the appearance. In addition, during production of the battery pack, the arrangement or combination form of the holder-fitted batteries 30 can be adjusted in accordance with, for example, the shape of the package of the battery pack. This can provide, during production of the battery pack, improved universal usability, applicability, or design.

### EXAMPLES

The present invention will be more specifically described with reference to Examples and Comparative Examples; however, the present invention is not limited to these. Those skilled in the art can perform various changes, modifications, or alterations without departing from the scope of the present invention. Incidentally, in Examples below, thermal-runaway-propagation prevention tests were performed in the following manner.

### (Thermal-runaway-propagation prevention test)

The outer peripheral surface of a 18650-type lithium-ion battery (discharge capacity: 3 Ah) was fitted with a battery holder of an Example or a Comparative Example to thereby provide a holder-fitted battery. For such holder-fitted batteries, three of them were arranged in parallel and fixed to produce a test battery pack.

Of the three holder-fitted batteries in the test battery pack, a holder-fitted battery at an end was penetrated from the outer periphery by being pierced with an N45 iron nail at a rate of 30 mm/s. The holder-fitted battery penetrated with the iron nail was defined as a "heat-source battery"; a holder-fitted battery (a holder-fitted battery at the center) adjacent to the heat-source battery was defined as an "adjacent battery"; in an environment at 25°C, under monitoring of the temperature of the adjacent battery, it was determined whether or not thermal runaway propagation occurred from the heat-source battery to the other holder-fitted batteries. Cases of no occurrence of thermal runaway propagation were evaluated as "O", and cases of occurrence of thermal runaway propagation were evaluated as "×".

### (Fiber volume fraction Vf)

In accordance with JIS K7075, the nitric-acid and sulfuric-acid decomposition processes were performed to remove the resin content alone from a tubular body serving as a test piece, and to calculate the mass of the resin composition containing an inorganic filler (resin composition amount). From this resin composition amount and the mass of the tubular body, fiber mass fraction Wf was calculated. From this Wf, the density pc of the tubular body, and the density pf of glass fiber or polyester fiber used for the tubular body, formula: Vf = (Wf × pc)/pf was used to calculate fiber volume fraction Vf.

### (Example 1)

As the resin component, a urethane resin (trade name: EIMFLEX EF-243, manufactured by DAI-ICHI KOGYO SEIYAKU CO., LTD.) was used and, as the inorganic filler, aluminum hydroxide was used to prepare (produce) a urethane resin composition having an inorganic filler content of 65 mass%. As the fibrous substrate, glass fibers (trade name: Multi-end Roving; product number: ER 550E-2400, manufactured by DAISO CHEMICAL CO., LTD.) were used; the glass fibers being arranged in parallel were continuously sent out, and impregnated with the urethane resin composition and molded into a tubular shape. In this way, three types of tubular bodies were prepared (produced) as battery holders in Example 1: a tubular body having a thickness of 1.5 mm and a fiber volume fraction Vf of 40%, a tubular body having a thickness of 1.0 mm and a Vf of 40%, and a tubular body having a thickness of 0.7 mm and a Vf of 50%.

In test battery packs provided by using the three types of the battery holders, the intervals between adjacent lithium-ion batteries (battery intervals) were respectively 3.0 mm, 2.0 mm, and 1.4 mm. These battery holders of Example 1 were subjected to the above-described thermal-runaway-propagation prevention tests. The results (the temperature of the adjacent battery and thermal-runaway-propagation evaluation) will be described in Table 1.

### (Example 2)

Three types of tubular bodies different in thickness and Vf were prepared as in Example 1 except that, as the inorganic filler, magnesium hydroxide was used, to provide battery holders in Example 2. These battery holders were subjected to the above-described thermal-runaway-propagation prevention tests. The results will be described in Table 1.

### (Example 3)

Three types of tubular bodies different in thickness and Vf were prepared as in Example 1 except that, as the inorganic filler, magnesium sulfate was used, to provide battery holders in Example 3. These battery holders were subjected to the above-described thermal-runaway-propagation prevention tests. The results will be described in Table 1.

### (Example 4)

Two types of tubular bodies were prepared as in Example 1 except that, as the inorganic filler, sodium hydrogen carbonate was used, to provide battery holders in Example 4: a tubular body having a thickness of 1.5 mm and a Vf of 50% and a tubular body having a thickness of 1.0 mm and a Vf of 50%. These battery holders were subjected to the above-described thermal-runaway-propagation prevention tests. The results will be described in Table 1.

### (Example 5)

Two types of tubular bodies (as in Example 4) were prepared as in Example 1 except that, as the inorganic filler, a mixture of aluminum hydroxide and sodium hydrogen carbonate mixed in 1:1 was used, to provide battery holders in Example 5: a tubular body having a thickness of 1.5 mm and a Vf of 50%, and a tubular body having a thickness of 1.0 mm and a Vf of 50%. These battery holders were subjected to the above-described thermal-runaway-propagation prevention tests. The results will be described in Table 1.

### (Example 6)

Two types of tubular bodies (as in Example 4) were prepared as in Example 1 except that, as the inorganic filler, a mixture of magnesium hydroxide and sodium hydrogen carbonate mixed in 1:1 was used, to provide battery holders in Example 6: a tubular body having a thickness of 1.5 mm and a Vf of 50%, and a tubular body having a thickness of 1.0 mm and a Vf of 50%. These battery holders were subjected to the above-described thermal-runaway-propagation prevention tests. The results will be described in Table 1.

### (Example 7)

As the fibrous substrate, a polyester fiber (manufactured by Taiyo tsushin kogyo Co., Ltd., trade name: ASMESH NTH-19 was used, and a urethane resin composition was prepared (produced) as in Example 1. Into an insert die, the polyester-fiber fibrous substrate was placed and the urethane resin composition was injected in a vacuum, so that the fibrous substrate was impregnated with the urethane resin composition to provide a tubular shape. In this way, three types of tubular bodies were prepared (produced) to provide battery holders in Example 7: a tubular body having a thickness of 1.5 mm and a Vf of 30%, a tubular body having a thickness of 1.0 mm and a Vf of 40%, and a tubular body having a thickness of 0.7 mm and a Vf of 60%. These battery holders were subjected to the above-described thermal-runaway-propagation prevention tests. The results will be described in Table 1.

### (Example 8)

Three types of tubular bodies different in thickness and Vf were prepared as in Example 7 except that, as the inorganic filler, magnesium hydroxide was used, to provide battery holders in Example 8. These battery holders were subjected to the above-described thermal-runaway-propagation prevention tests. The results will be described in Table 1.

### (Comparative Example 1)

Two types of tubular bodies (as in Example 4) were prepared as in Example 1 except that no inorganic filler was contained (specifically, the inorganic filler was not added and the urethane resin alone was used), to provide battery holders in Comparative Example 1: a tubular body having a thickness of 1.5 mm and a Vf of 50%, and a tubular body having a thickness of 1.0 mm and a Vf of 50%. These battery holders were subjected to the above-described thermal-runaway-propagation prevention tests. The results will be described in Table 1.

### (Comparative Example 2)

Two types of tubular bodies were prepared as in Example 4 such that the glass fiber serving as the fibrous substrate was not used, and the urethane resin alone without containing inorganic filler was used, to provide battery holders in Comparative Example 2. These battery holders were subjected to the above-described thermal-runaway-propagation prevention tests. The results will be described in Table 1.

**[Table 1]**

| | Fibrous substrate | Inorganic filler of urethane resin composition | Fiber volume fraction Vf [%] | Battery intervals [mm] | Thickness [mm] | Temperature of adjacent battery [°C] | Thermal-runaway-propagation evaluation |
|---|---|---|---|---|---|---|---|
| Example 1 | Glass fiber | Aluminum hydroxide | 40 | 3.0 | 1.5 | 100 | ○ |
| | | | 40 | 2.0 | 1.0 | 115 | ○ |
| | | | 50 | 1.4 | 0.7 | 125 | ○ |
| Example 2 | Glass fiber | Magnesium hydroxide | 40 | 3.0 | 1.5 | 103 | ○ |
| | | | 40 | 2.0 | 1.0 | 115 | ○ |
| | | | 50 | 1.4 | 0.7 | 130 | ○ |
| Example 3 | Glass fiber | Magnesium sulfate | 40 | 3.0 | 1.5 | 110 | ○ |
| | | | 40 | 2.0 | 1.0 | 128 | ○ |
| | | | 50 | 1.4 | 0.7 | 145 | ○ |
| Example 4 | Glass fiber | Sodium hydrogen carbonate | 50 | 3.0 | 1.5 | 108 | ○ |
| | | | 50 | 2.0 | 1.0 | 128 | ○ |
| Example 5 | Glass fiber | Aluminum hydroxide: Sodium hydrogen carbonate = 1:1 | 50 | 3.0 | 1.5 | 110 | ○ |
| | | | 50 | 2.0 | 1.0 | 130 | ○ |
| Example 6 | Glass fiber | Magnesium hydroxide: Sodium hydrogen carbonate = 1:1 | 50 | 3.0 | 1.5 | 115 | ○ |
| | | | 50 | 2.0 | 1.0 | 135 | ○ |
| Example 7 | Polyester fiber | Aluminum hydroxide | 30 | 3.0 | 1.5 | 90 | ○ |
| | | | 40 | 2.0 | 1.0 | 108 | ○ |
| | | | 60 | 1.4 | 0.7 | 110 | ○ |
| Example 8 | Polyester fiber | Magnesium hydroxide | 30 | 3.0 | 1.5 | 94 | ○ |
| | | | 40 | 2.0 | 1.0 | 105 | ○ |
| | | | 60 | 1.4 | 0.7 | 120 | ○ |
| Comparative Example 1 | Glass fiber | (Not contained) | 50 | 3.0 | 1.5 | 500°C or higher | × |
| | | | 50 | 2.0 | 1.0 | 500°C or higher | × |
| Comparative Example 2 | (None) | (Not contained) | ○ | 3.0 | 1.5 | 500°C or higher | × |
| | | | ○ | 2.0 | 1.0 | 500°C or higher | × |

### (Comparison among Examples and Comparative Examples)

The results of Examples 1 to 8 have demonstrated that the battery holders according to these Examples prevent thermal runaway propagation even in the thermal-runaway-propagation prevention tests, and achieve high flame retardancy and high heat dissipation. In addition, the results of Examples 1 to 6 and the results of Examples 7 and 8 have demonstrated that, regardless of whether the fibrous substrate is an inorganic fiber or an organic resin fiber, the battery holders according to these Examples achieve high flame retardancy and high heat dissipation.

By contrast, the battery holders according to Comparative Example 1, which used the urethane resin not containing any inorganic filler, did not achieve high flame retardancy or high heat dissipation. Similarly, the battery holders according to Comparative Example 2, which used the urethane resin not containing any inorganic filler and did not use any inorganic fiber or organic resin fiber serving as fibrous substrates, did not achieve high flame retardancy or high heat dissipation. Incidentally, in each of battery holders of Comparative Examples 1 and 2, in the thermal-runaway-propagation prevention test, thermal runaway propagation occurred not only from the heat-source battery to the adjacent battery, but also to the remaining battery.

Note that the present invention is not limited to the above descriptions of Embodiments; various changes can be made within the scope described in CLAIMS; embodiments provided by appropriately combining technical features individually disclosed in different embodiments or a plurality of modifications also fall within the technical scope of the present invention.

### Industrial Applicability

The present invention is widely and suitably applicable to the field of battery holders and battery packs using the battery holders irrespective of, for example, the shape or type of batteries.

### Reference Signs List

10: battery holder
10a: battery-housing portion (through-space)
11, 11A to 11C: fibrous substrates
12: resin composition
20: lithium-ion battery (battery)
21: terminal cap
22: sealing part
23: electrode group
24: outer packaging part
30: holder-fitted battery
31A, 31B: battery pack unit
32: dead space

## Claims

1. A battery holder at least comprising a tubular body having a through-space for housing a battery, wherein the tubular body includes a fibrous substrate and a resin composition containing an inorganic filler.

2. The battery holder according to Claim 1, wherein a fiber forming the fibrous substrate is at least one fiber selected from the group consisting of glass fiber, polyester fiber, carbon fiber, boron fiber, aramid fiber, nylon fiber, polyethylene fiber, polyarylate fiber, BPO fiber, polyphenylene sulfide fiber, polyimide fiber, and fluorofiber.

3. The battery holder according to Claim 1 or 2, wherein the fibrous substrate is formed of braid, woven fabric, knitted fabric, nonwoven fabric, monofilaments, or rovings.

4. The battery holder according to any one of Claims 1 to 3, wherein the tubular body has a fiber volume fraction Vf in a range of 15 to 65%.

5. The battery holder according to any one of Claims 1 to 4, wherein the resin composition contains, relative to 100 mass% of a total amount of the resin composition, the inorganic filler in a range of 40 to 80 mass%.

6. The battery holder according to any one of Claims 1 to 5, wherein the resin composition contains, as a resin component, at least one resin selected from the group consisting of urethane resin, epoxy resin, silicone resin, phenol resin, unsaturated polyester resin, and melamine resin.

7. The battery holder according to any one of Claims 1 to 6, wherein the inorganic filler is at least one selected from the group consisting of divalent or trivalent metal hydroxide, divalent metal sulfate hydrate, zinc salt of oxoacid, silica, alumina, dawsonite, and sodium hydrogen carbonate.

8. A battery pack comprising the battery holder according to any one of Claims 1 to 7.
